# DEMANDE DE BREVET EUROPEEN

(11) **EP 1 669 235 A1**
(43) Date de publication de la demande: **14.06.2006**
(21) Numéro de dépôt: 05292658.1
(22) Date de dépôt: 13.12.2005
(51) Int. Cl.: B60K 5/12, F16F 1/38

(54) **Butee acoustique pilotable et procédé de contrôle de la rigidite de la butee**

(30) Priorité: 13.12.2004 FR 0413223
(71) Demandeur: HUTCHINSON, 75008 Paris (FR)
(72) Inventeur: Compain, Laurent, 45770 Saran (FR); Stahl, Manfred, 28200 Chateaudun (FR)
(74) Mandataire: Burbaud, Eric

(57) **Abrégé**

L'invention concerne un dispositif anti-vibratoire comprenant une première armature (12), une deuxième armature (16), un corps en élastomère (20) reliant les deux armatures (12, 16) pour amortir des vibrations entre les première et les deuxième armatures, et s'étendant selon un premier axe, une butée (32) reliée à la deuxième armature, déformable pour amortir des vibrations entre la deuxième armature et une contrebutée (38) selon un deuxième axe. La déformation de la butée (32) est contrôlée par l'intermédiaire d'une chambre (40) à une pression modifiable.

## Description

La présente invention se rapporte aux dispositifs anti-vibratoires.

Plus particulièrement, l'invention concerne un dispositif anti-vibratoire hydraulique destiné à amortir les vibrations entre un premier et un deuxième éléments de structure, tels qu'un moteur et un châssis d'un véhicule comportant une boîte de vitesses, ce dispositif comprenant une première armature destinée à être solidarisée au premier élément de structure, une deuxième armature destinée à être solidarisée au deuxième élément de structure,un corps en élastomère reliant les deux armatures pour amortir des vibrations entre les premiers et les deuxièmes armatures, et s'étendant selon un premier axe, et délimitant partiellement avec les première et deuxième armatures, une chambre hydraulique de travail remplie de fluide, et une butée déformable.

De tels dispositifs antivibratoires hydrauliques sont connus et permettent d'absorber les vibrations par transmission des déplacements relatifs des deux armatures au corps en élastomère par le liquide contenu dans la chambre. Le corps en élastomère se déforme alors pour absorber ces déplacements.

La présente invention a pour but de proposer un dispositif antivibratoire capable d'amortir plus efficacement des déplacements entre les première et deuxième armatures lorsque différentes charges sont appliquées au dispositif.

A cet effet, selon l'invention un dispositif du genre en question est caractérisé en ce qu'il comporte une butée reliée à la deuxième armature pour amortir des vibrations entre la deuxième armature et une contrebutée selon un deuxième axe, distinct du premier axe, et en ce que la déformation de la butée est contrôlée par l'intermédiaire d'une chambre de pression remplie de liquide adaptée pour avoir une pression modifiable, au moyen d'un canal dont une première extrémité débouche dans la chambre de pression et mettant en communication la chambre de pression avec la chambre de travail.

On entendra par le terme déformation, le déplacement de la butée par rapport à sa position initiale, sous l'effet d'une contrainte.

Dans divers modes de réalisation du dispositif dans l'invention, on peut éventuellement avoir recours en outre à l'une et/ou à l'autre des dispositions suivantes :
■ le dispositif antivibratoire comporte une chambre hydraulique de compensation délimitée partiellement par la deuxième armature, un passage étranglé faisant communiquer entre elles la chambre hydraulique de travail et la chambre hydraulique de compensation, et dans lequel la chambre de pression communique avec la chambre de travail via la chambre de compensation ;
■ le dispositif anti-vibratoire comporte un piston disposé dans la chambre de pression et un actionneur déplaçant le piston entre une position fermée dans laquelle il obture le canal et une position ouverte dans laquelle le canal est ouvert ;
■ au moins un des paramètres d'entrée de l'actionneur est le rapport de boîte engagée ;
■ l'actionneur est piloté électriquement ;
■ l'actionneur est piloté pneumatiquement ;
■ le piston est sollicité élastiquement vers sa position fermée par au moins une branche en élastomère reliant le piston à un support ;
■ la chambre de pression de la butée est ménagée dans la deuxième armature.

Par ailleurs, l'invention a également pour objet un procédé de contrôle de la rigidité d'une butée acoustique dans un dispositif selon l'une des revendications précédentes.

D'autres caractéristiques et avantages de l'invention apparaîtront au cours de la description suivante de plusieurs de ces modes de réalisation donnés à titre d'exemples non limitatifs en regard des dessins joints.

Sur les dessins :
- la figure 1 représente une vue partielle en coupe longitudinale d'un support hydraulique antivibratoire équipé d'une butée acoustique selon un premier mode de réalisation,
- la figure 2 représente sur une figure similaire à celle de la figure 1 d'une variante du dispositif selon le premier mode de réalisation,
- la figure 3 représente sur une vue similaire à celle de la figure 1, une autre variante du dispositif selon le premier mode de réalisation ;
- la figure 4 représente une vue similaire à celle de la figure 1 d'une troisième variante du dispositif du premier mode de réalisation.
- la figure 5 représente un graphique de l'évolution de la courbe de l'effort sur le déplacement d'un dispositif antivibratoire selon l'invention et d'un dispositif de l'art antérieur,
- la figure 6 représente un schéma de principe du dispositif selon l'invention.
- la figure 7 représente un deuxième mode de réalisation du dispositif selon l'invention,
- la figure 8 représente un troisième mode de réalisation du dispositif selon l'invention.

Sur les différentes figures les mêmes références désignent des éléments identiques ou similaires.

Les dispositifs anti-vibratoires du type décrit précédemment sont destinés à amortir les vibrations entre deux éléments de structure vibrant l'un par rapport à l'autre, tel que des éléments d'un véhicule. Par exemple, ils peuvent être disposés entre un moteur et la caisse, de manière à limiter la transmission des vibrations du moteur à la caisse, tout en supportant l'un des éléments de structure, par exemple le moteur.

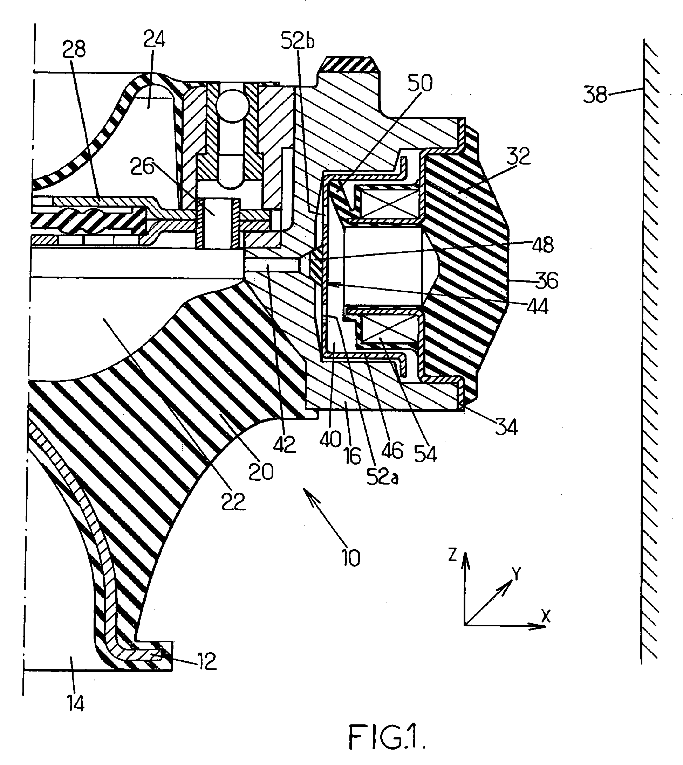

Un premier mode de réalisation du dispositif antivibratoire selon l'invention est représenté à la figure 1. Ce dispositif anti-vibratoire 10 selon l'invention comporte une première armature 12 destinée à être fixée sur un élément de structure, ici un châssis, et une deuxième armature 16, destinée à être reliée à un second élément de structure, ici un moteur, mobile par rapport au premier élément de structure. Un corps en élastomère 20 relie la première armature 12 et la seconde armature 16, et délimite partiellement une première chambre hydraulique 22, dite de travail. Le corps en élastomère 20 présente une forme conique et s'étend longitudinalement entre deux extrémités reliées respectivement à la première 12 et à la deuxième 16 armatures. Le corps en élastomère amortit les vibrations entre les première et deuxième armature.

Ainsi le second élément de structure repose sur le premier élément de structure 11, sur lequel le poids du second élément s'exerce parallèlement à un axe longitudinal Z.

La chambre de travail 22 est remplie de liquide, et communique avec une seconde chambre, dite de compensation 24 à travers un passage étranglé 26 formé dans une cloison rigide 28 séparant les deux chambres 22, 24. La chambre de compensation 24 est délimitée partiellement par une paroi souple 30 déformable reliée à la deuxième armature 16.

Le transfert du liquide d'une chambre à une autre à travers le passage étranglé 26 permet d'absorber une partie des vibrations entre les première et deuxième armatures et notamment celles à l'origine d'un déplacement des armatures 12, 16 l'une par rapport à l'autre parallèlement à l'axe Z.

Tel que représenté à la figure 1, la deuxième armature 16 comporte une butée 32 dirigée selon un axe transversal X perpendiculaire à l'axe longitudinal Z. La butée 32 est une pièce de caoutchouc moulée sur une pièce métallique 34 emmanchée elle-même sur la deuxième armature 16. Cette butée 32 présente une face avec une protubérance dirigée vers une contrebutée 38, par exemple un autre élément du véhicule rigidement solidaire du châssis, et en saillie de la deuxième armature 16. Cette butée 32 est adaptée pour coopérer avec la contrebutée 38 afin de limiter les déplacements et d'amortir les vibrations dirigées selon l'axe transversal X, entre la deuxième armature 16 et la contrebutée 38 ou entre la deuxième armature 16 et la première armature 12.

La butée 32 forme avec la deuxième armature 16 une chambre de pression 40 qui est aussi remplie de liquide. La chambre de pression 40 communique, tel que représenté à la figure 1, avec la chambre de travail 22 du dispositif 10 par l'intermédiaire d'un canal 42 qui s'étend selon la direction transversale X. Ainsi le liquide de la chambre de pression 40 peut passer dans la chambre de travail 22 par l'intermédiaire du canal 42.

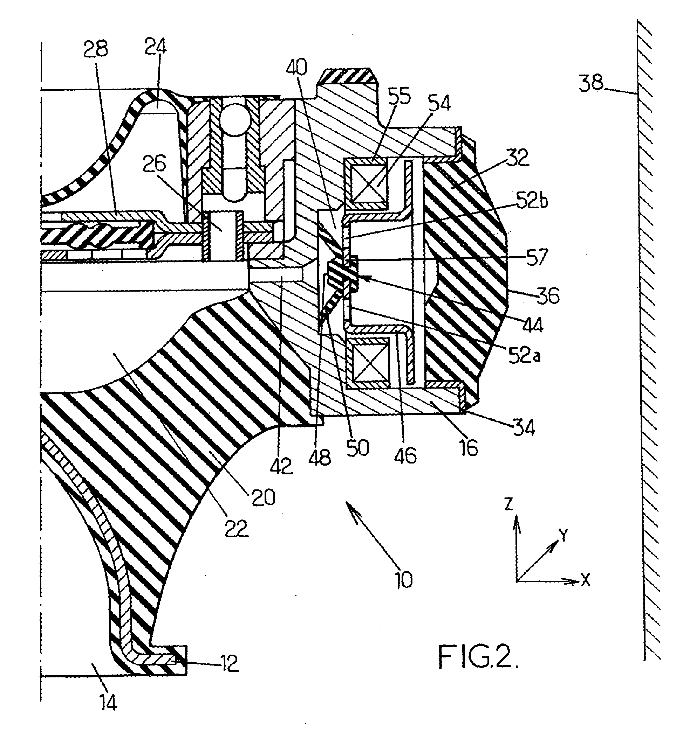

La chambre de pression 40 comporte en outre un piston 44 qui se déplace entre une position fermée et une position ouverte. En position fermée, telle que représentée à la figure 1, le piston 44 obture une extrémité du canal 42, et ainsi empêche la communication entre la chambre de travail 22 et la chambre de pression 40. En position ouverte, telle que représentée à la figure 2, le piston 44 est éloigné de l'extrémité du canal 42 et permet ainsi la communication entre la chambre de travail 22 et la chambre de pression 40.

Le piston 44 est constitué d'un support 46 sur lequel est disposé un bouchon 48 en élastomère de forme conique et destiné à obturer le canal 42 de manière à empêcher le passage du fluide. Le support 46 est réalisé dans une matière rigide telle que de la tôle emboutie.

Le piston 44 est suspendu à la deuxième armature 16 par l'intermédiaire de trois languettes 50 (dont 1 seule est visible sur la figure 1) de caoutchouc reliées au support 46. Ces languettes 50 peuvent se déformer pour autoriser le déplacement du support 46 par rapport à la deuxième armature 16. Les trois languettes 50 agissent comme un ressort de compression de manière à pousser le piston 44 en direction du canal 42 vers la position fermée. Le support 46 comporte en outre deux ouvertures 52a, 52b à travers lesquelles s'écoule le liquide lors du déplacement du support 46.

Le support 46 est commandé par un actionneur qui contrôle le déplacement du support 46 de la position fermée vers la position ouverte, ou inversement. Ce déplacement est réalisé parallèlement à l'axe transversal X. L'actionneur commande le support en fonction de différents paramètres.

L'actionneur peut être électrique, tel que représenté à la figure 1. Il comporte alors une bobine 54 alimentée électriquement et disposée autour de la première pièce métallique 34, centrée sur l'axe transversale X à proximité du support 46. Ainsi lorsque la bobine 54 est parcourue par un courant, elle génère un champ magnétique ce qui entraîne le déplacement du support 46, tendant à réduire l'entrefer entre la pièce métallique 34 et le support 46, de manière à ouvrir le canal 42 et ainsi de mettre la chambre de pression 40 et la chambre de travail 22 en communication.

L'invention fonctionne comme décrit ci-dessous :

Le but de l'invention est de filtrer les vibrations, dirigées selon la direction transversale X, d'un ensemble motopropulseur, afin de procurer à l'utilisateur un meilleur confort acoustique.

Le dispositif antivibratoire 10 doit pouvoir présenter plusieurs raideurs afin d'amortir de manière optimale les vibrations, quelque soit la charge appliquée au dispositif 10. En particulier, le dispositif doit pouvoir présenter une butée déformable, dont la capacité de déformation, et par conséquent, sa rigidité, est contrôlable.

La charge appliquée étant liée au rapport de boîte de vitesse engagé, le dispositif anti-vibratoire 10 selon l'invention présente une raideur, selon l'axe transversal X, dépendante de ce rapport de boîte. Pour cela l'actionneur contrôle la pression dans la chambre de pression 40 en déclenchant le déplacement du piston 44 en fonction de l'information obtenue concernant le rapport de boîte.

Sur le dispositif représenté à la figure 1, le piston 44 est en position fermée. C'est-à-dire que le bouchon 48 en élastomère ferme l'extrémité du canal 42 débouchant dans la chambre de pression 40. Ainsi le fluide ne peut pas passer depuis la chambre de pression 40 vers la chambre de travail 22. La chambre de pression 40, délimitée partiellement par la butée 32 et remplie de liquide, se déforme peu.

Dans ce cas le dispositif antivibratoire est en position dite dure.

La raideur de gonflement de la butée 32 est lié à la pression de la chambre de pression 40 fermée et remplie de liquide s'ajoute à la raideur de la butée 32 qui se déforme peu. La raideur transversale du dispositif 10 est donc plus importante. Cette position est utilisée lorsque le rapport de boîte de vitesses engagée est en première ou en deuxième, ce qui correspond à un effort de reprise de couple important.

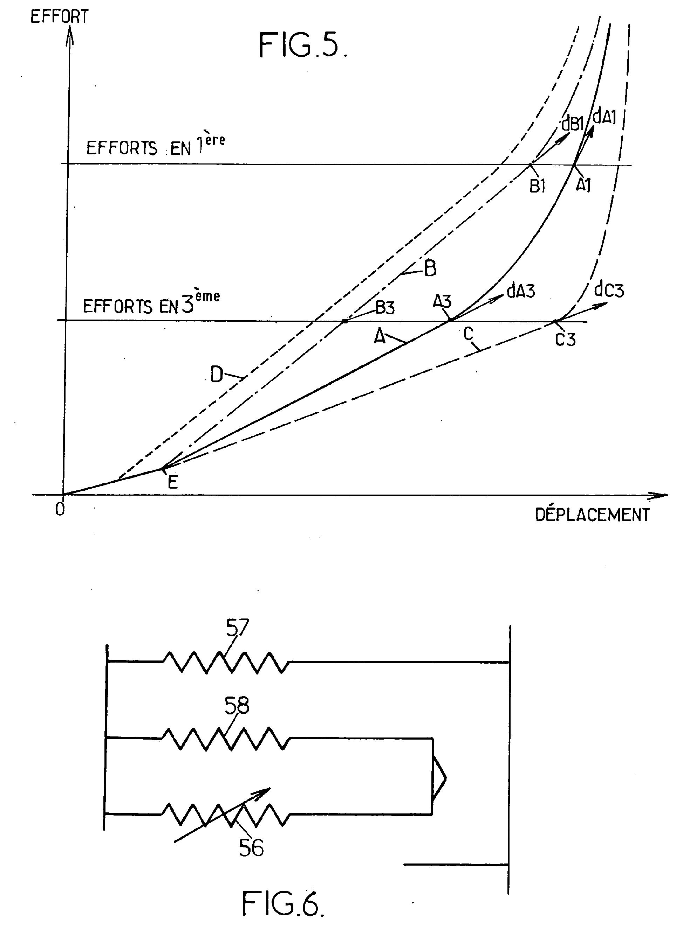

Le dispositif de la figure 1 est schématisé à la figure 6, sur laquelle la raideur de gonflement hydraulique de la butée est représentée par un ressort à raideur variable 56 disposé en parallèle d'un ressort 58 correspondant à la raideur butée en élastomère. Le ressort 57 représente la liaison élastique du corps en élastomère 20.

La position ouverte du canal 42 est par exemple obtenue lorsque le rapport de boîte est en troisième, quatrième ou cinquième. Pour ce cas, l'actionneur est alimenté électriquement et déplace le support vers une position distale du canal 42.

En position ouverte, la chambre de pression 40 et la chambre de travail 22 sont communicantes à travers le canal 42. La raideur du dispositif 10 selon l'axe transversal X est donc plus faible car la chambre de pression 40, délimitée partiellement par la butée 32, présente une capacité de déformation plus importante.

Sur la figure 5 sont illustrés plusieurs courbes représentant l'évolution de l'effort exercé entre les premier et deuxième éléments, en fonction des débattements entre eux. Les lignes horizontales représentent respectivement l'effort appliqué lorsque le rapport est engagé en première et en troisième.

La courbe A correspond à l'évolution de l'effort sur la déformation d'un dispositif connu de l'art antérieur. Dans ce cas, lorsque le rapport est engagé en première, l'effort appliqué correspond à une déformation élastique représentée par la courbe OA1. Puis lors d'un changement de rapport, le dispositif est ramené dans sa position initiale O, puis l'effort appliqué, par exemple avec un rapport en troisième, correspond à une déformation élastique correspondant à la courbe OA3.

Les courbes B et C représentent l'évolution de l'effort sur la déformation du dispositif selon l'invention, selon que le rapport soit engagé en première ou en troisième.

La courbe B illustre l'évolution de l'effort sur le déplacement lorsque le dispositif est en position dite « dure ». Cette position est utilisée lorsqu'une forte charge est appliquée au dispositif, c'est à dire lorsque le rapport de boîte est engagé en première ou en deuxième. Lorsque le rapport de boite est engagé, par exemple, en première, la déformation élastique du dispositif par rapport au déplacement est illustré par la courbe OB1. Les deux flèches dB1 et dA1 illustrent que pour un rapport en première (c'est à dire une forte charge), la rigidité statique représentée par la pente de la courbe dB1, est plus faible que celle dA1 de la courbe A de l'art antérieur. La butée 32 amortit donc plus efficacement un effort important.

La courbe C illustre l'évolution de l'effort sur le déplacement lorsque le dispositif est en position dite « souple ». Cette position est utilisée lorsqu'une faible charge est appliquée au dispositif, c'est à dire lorsque le rapport de boîte est engagé en troisième, quatrième ou cinquième. Lorsque le rapport de boite est engagé, par exemple en troisième, la déformation élastique du dispositif par rapport au déplacement est illustré par la courbe OC3. les deux flèches dC3 et dA3 illustrent que pour un rapport en troisième (c'est à dire une faible charge), la rigidité statique, représentée par la pente de la courbe dC3 est plus faible que celle dA3 des butées de l'art antérieur, et peut donc amortir plus efficacement les vibrations.

Ces courbes A, B et C illustrent l'évolution de la raideur du dispositif pour une seule disposition de butée 32 et de la contrebutée 38, et peuvent considérablement varier selon cette disposition. Notamment le début E de chaque courbe dépend de l'attaque de butée qui est fonction des dimensions et positions de la butée 32 par rapport à la contrebutée 38. La partie de la courbe située entre le point de l'origine et le point E correspond à un déplacement précédant l'attaque de butée et représente la raideur transversale du corps en élastomère 20.

La courbe D représente l'évolution de l'effort sur le déplacement pour une butée en position « dure », avec un décalage de l'attaque de butée. C'est à dire que la butée 32 vient plus tôt en contact avec la contrebutée 38 que pour un dispositif illustré par les courbes B et C.

Lorsque le canal 42 est ouvert, le passage du liquide à travers le canal 42 peut aussi amortir les vibrations par effet de résonance de la masse de liquide dans le canal 42, lorsque que la fréquence de vibration atteint une valeur prédéterminée qui est fonction du rapport entre la longueur axiale et la section droite du canal. Cette mise en résonance assure un excellent amortissement des vibrations.

Une première variante du premier mode de réalisation de l'invention est illustrée par la figure 2. selon cette variante, la bobine 54 est directement placée sur la deuxième armature 16 dans une carcasse 55 formant une gorge annulaire ouverte vers l'extérieur du dispositif 10. Le support 46 présente une couronne circulaire, en regard de la gorge de la carcasse 55, qui se poursuit vers l'intérieur de la bobine 54 par une coupelle dont le fond 57 supporte le bouchon 48. Le fond 57 est muni d'au moins deux ouvertures 52a, 52b pour le passage du fluide de la chambre de pression 40 vers le canal 42. Le support 56 est maintenu en position distale du canal 42, donc en position ouverte du piston 44 grâce à des languettes 50 de caoutchouc.

L'actionneur comprenant la bobine 54 sollicite donc, selon cette variante, le piston 44 vers sa position fermée.

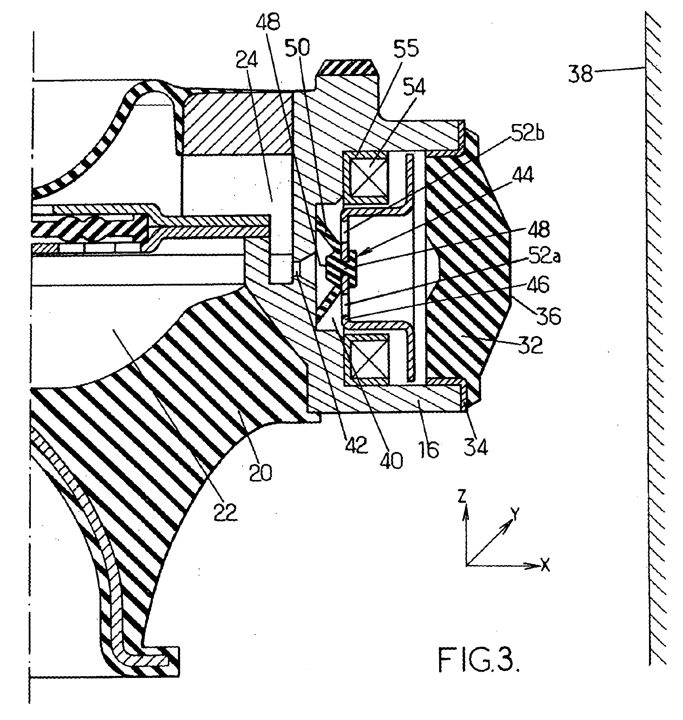

Une troisième variante du premier mode de réalisation est illustrée par la figure 3. Selon cette variante la chambre de pression 40 est reliée par l'intermédiaire du canal 42 à la chambre de compensation 24. Cette dernière présente une pression sensiblement constante et sensiblement égale à la pression atmosphérique, ce qui ne perturbe pas trop la pression de la chambre de pression 40 lorsque le canal 42 est ouvert. Contrairement à ce qui se passe lorsque la chambre de travail 22 communique avec la chambre de pression, puisque les variations de pression dans la chambre de travail 22 peuvent être importantes et interférer avec celle de la chambre de pression 40.

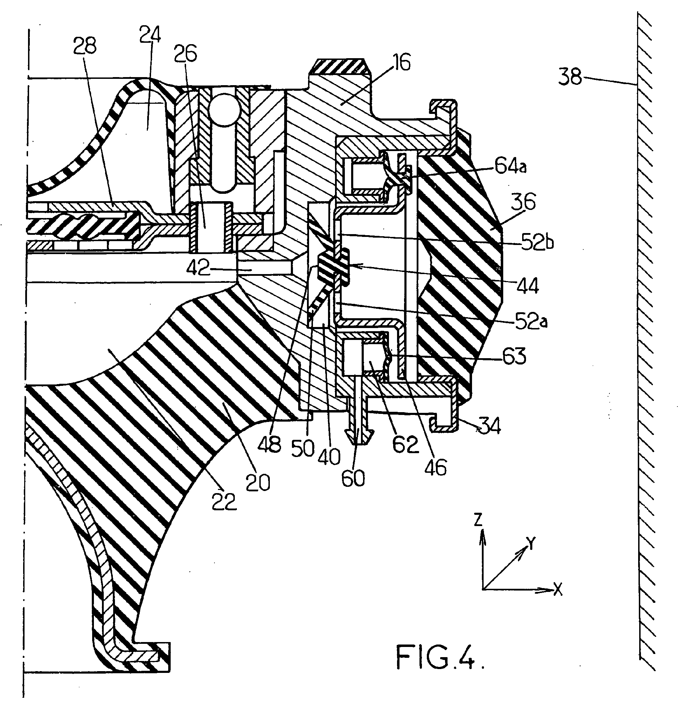

Une quatrième variante du premier mode de réalisation est illustrée par la figure 4. Selon cette variante, l'actionneur est à pilotage pneumatique. Pour cela la chambre de pression 40 comporte une ouverture 60 reliée à un système de mise sous pression qui débouche dans une chambre annulaire 62. La chambre est obturée par un piston annulaire 63 muni d'ergots 64a, 64b. Le piston annulaire est déplaçable parallèlement à l'axe X, à l'intérieur de la chambre annulaire 62. Les ergots 64a, 64b sont reliés au support 46. Ainsi lorsqu'une pression est injectée dans la chambre annulaire 62, le volume de la chambre annulaire 62 augmente et les ergots 64a, 64b se déplacent alors en entraînant en même temps le support 46 sur lequel ils sont raccordés. Le support 46 éloigne alors le bouchon 48 du canal 42.

Quelque soit la variante de ce premier mode de réalisation on obtient un dispositif anti-vibratoire pour la suspension d'un moteur de véhicule qui permet d'offrir un confort acoustique en proposant une rigidité différente de la butée selon le type de rapport engagé.

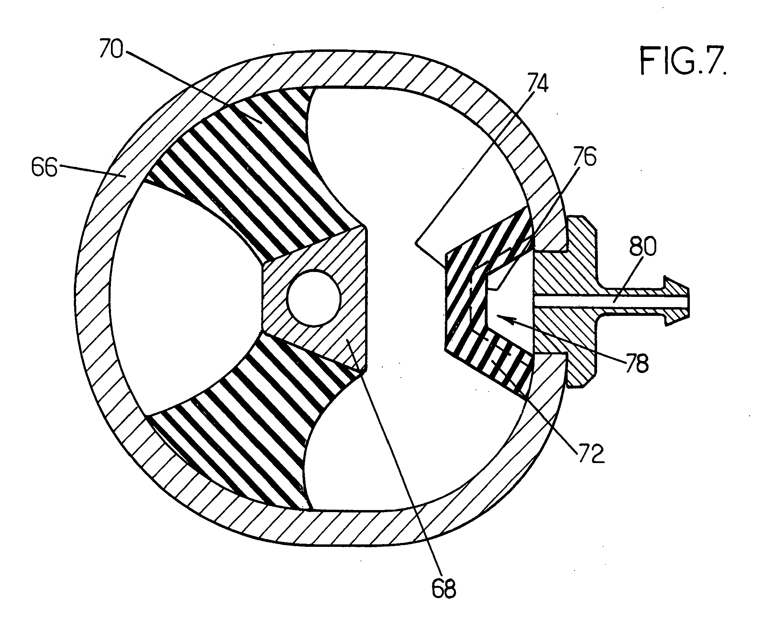

Selon d'autres modes de réalisation, l'invention peut être appliquée à d'autres éléments destinés à limiter la transmission des vibrations. Tel que représenté à la figure 7, le dispositif antivibratoire selon le deuxième mode de réalisation de l'invention est une articulation comportant une armature extérieure 66 et une armature intérieure 68, chacune reliée à un élément de structure. Un corps en élastomère 70 s'étend selon un premier axe radial et relie les deux armatures 66, 68. Il permet d'amortir les vibrations entre les deux éléments de structure. Une butée 72 est disposée sur l'armature extérieure 66 et sa première surface 74 vient buter, selon un deuxième axe radial sensiblement perpendiculaire au premier axe, contre l'armature intérieure 68, qui joue le rôle de la contrebutée. La butée 72 présente une deuxième surface 76 limitant une chambre de pression 78 qui fonctionne comme décrit dans le premier mode de réalisation. Sur la figure 7, l'actionneur permettant d'augmenter la raideur de la butée 72 comporte un moyen de mise sous pression d'un fluide ou d'un gaz relié par une ouverture 80 à la chambre de pression 78. L'actionneur commande l'envoi ou le retrait de fluide sous pression dans la chambre de pression 78 en fonction du type de rapport engagé.

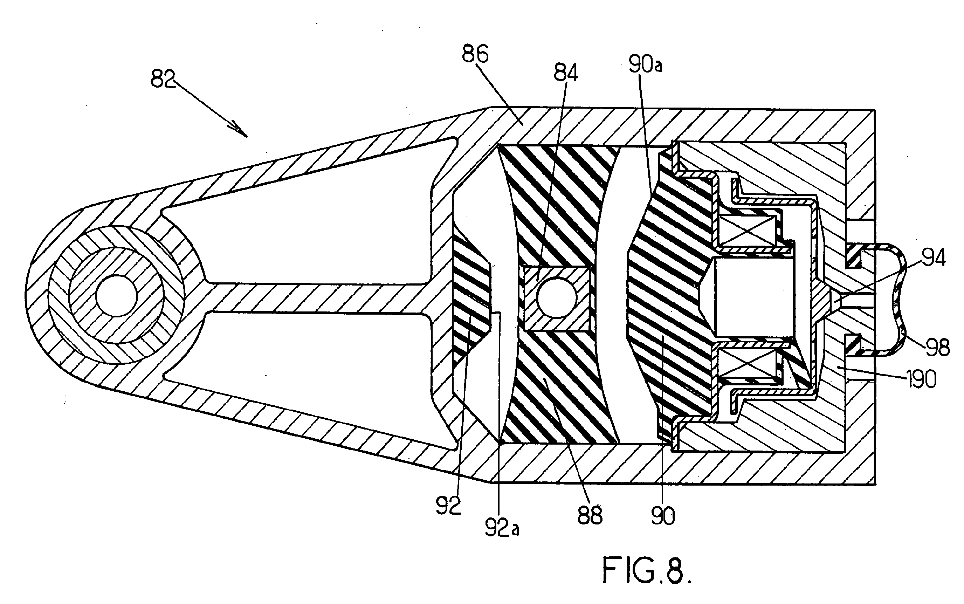

Un troisième mode de réalisation de l'invention est représenté sur la figure 8. Selon ce mode de réalisation, le dispositif antivibratoire est une biellette 82 comportant au moins une armature intérieure 84 reliée à l'armature extérieure 86 par un corps en élastomère 88. Le corps en élastomère 88 comporte deux branches s'étendant radialement à partir de l'armature intérieure sensiblement perpendiculairement à l'axe longitudinal de la biellette 82. Deux butées 90, 92 sont disposées de part et d'autre de l'armature intérieure 84, le long de la direction longitudinale de la biellette 82. Ces butées 90, 92 sont rattachées à l'armature extérieure 80 et présentent une face de butée 90a, 92a en regard de l'armature intérieure 84, de manière à limiter le déplacement de l'armature interne 84 par rapport à l'armature externe 86 sensiblement parallèlement à l'axe longitudinal de la biellette. Une de ces butées 90 est adaptée pour avoir une raideur réglable en fonction du rapport de boîte engagé, comme décrit dans le premier mode de réalisation. Pour cela la butée 90 présente un actionneur électromagnétique et un canal 94 comme décrit précédemment, ce canal 94 débouchant dans une chambre 96 déformable délimitée par un corps en élastomère 98 et par une armature rigide 100 sur laquelle est montée la butée 90.

Les dispositifs détaillés ci-dessus ne sont pas limités aux modes de réalisation décrits qui n'ont été donnés qu'à titre d'exemple.

## Revendications

1. Dispositif anti-vibratoire hydraulique destiné à amortir les vibrations entre un premier (14) et un deuxième (18) éléments de structure, tels qu'un moteur et un châssis d'un véhicule comportant une boîte de vitesses, ce dispositif comprenant :
- une première armature (12) destinée à être solidarisée au premier élément de structure (14),
- une deuxième armature (16) destinée à être solidarisée au deuxième élément de structure (18),
- un corps en élastomère (20) reliant les deux armatures (12, 16) pour amortir des vibrations entre les premières (12) et les deuxièmes (16) armatures, et s'étendant selon un premier axe, et délimitant partiellement avec les première et deuxième armatures, une chambre hydraulique de travail (22) remplie de fluide, et
- une butée déformable,
**caractérisé en ce que** la butée (32) est reliée à la deuxième armature (16) pour amortir des vibrations entre la deuxième armature (16) et une contrebutée (38) selon un deuxième axe, distinct du premier axe,
et **en ce que** la déformation de la butée (32) est contrôlée par l'intermédiaire d'une chambre de pression remplie de liquide (40) adaptée pour avoir une pression modifiable, au moyen d'un canal (42) dont une première extrémité débouche dans la chambre de pression (40) et mettant en communication la chambre de pression (40) avec la chambre de travail (22)

2. Dispositif antivibratoire selon la revendication 1, comportant une chambre hydraulique de compensation (24) délimitée partiellement par la deuxième armature (16), un passage étranglé (26) faisant communiquer entre elles la chambre hydraulique de travail (22) et la chambre hydraulique de compensation (24), et dans lequel la chambre de pression (40) communique avec la chambre de travail (22) via la chambre de compensation (24).

3. Dispositif anti-vibratoire selon l'une des revendications précédentes, comportant un piston (44) disposé dans la chambre de pression (40) et un actionneur déplaçant le piston (44) entre une position fermée dans laquelle il obture le canal (42) et une position ouverte dans laquelle le canal (42) est ouvert.

4. Dispositif anti-vibratoire selon la revendication précédente, dans lequel au moins un des paramètres d'entrée de l'actionneur est le rapport de boîte engagée.

5. Dispositif anti-vibratoire selon l'une des revendications 3 et 4, dans lequel l'actionneur est piloté électriquement.

6. Dispositif anti-vibratoire selon l'une quelconque des revendications précédentes 3 et 4, dans lequel l'actionneur est piloté pneumatiquement.

7. Dispositif selon l'une des revendications 3 à 6, dans lequel le piston (44) est sollicité élastiquement vers sa position fermée par au moins une branche (50) en élastomère reliant le piston (44) à un support (46).

8. Dispositif antivibratoire selon l'une des revendications précédentes, dans lequel la chambre de pression (40) de la butée (32) est ménagée dans la deuxième armature (16).

9. Procédé de contrôle de la rigidité d'une butée dans un dispositif selon l'une des revendications précédentes, comprenant les étapes consistant à :
- capter une information sur le rapport de boîte de vitesse engagé,
- faire varier la pression dans la chambre de pression (40) en fonction de la valeur obtenue lors de l'étape précédente.
